# EUROPÄISCHE PATENTSCHRIFT

(11) **EP 2 772 701 B1**
(45) Veröffentlichungstag und Bekanntmachung des Hinweises auf die Patenterteilung: **20.07.2016**
(21) Anmeldenummer: 14154836.2
(22) Anmeldetag: 12.02.2014
(51) Int. Cl.: F24J 2/40, F24J 2/32, F24J 2/46

(54) **Solarkollektor**
Solar collector
Collecteur solaire

(30) Priorität: 27.02.2013 DE 102013101913
(43) Veröffentlichungstag der Anmeldung: 03.09.2014
(73) Patentinhaber: Viessmann Werke GmbH & Co. KG, 35108 Allendorf (DE)
(72) Erfinder: Wenzler, Sigurd, 35066 Frankenberg (DE); Budano, Dominique, 57500 Saint-Avold (FR)
(74) Vertreter: Wolf, Michael

(56) Entgegenhaltungen:
- EP-B1- 0 717 244
- DE-U1-202007 008 221
- GB-A- 2 095 393
- JP-A- S5 685 656
- US-A- 4 311 131
- US-A- 4 382 437
- US-A- 4 505 261

## Beschreibung

Die Erfindung betrifft einen Solarkollektor gemäß dem Oberbegriff des Patentanspruchs 1.

Ein Solarkollektor der eingangs genannten Art ist nach der EP 0 717 244 B1 bekannt. Dieser Solarkollektor besteht aus mehreren Wärmerohren mit jeweils einem Kondensator, der zwischen zwei Leitungssträngen eines Sammlers angeordnet ist, wobei ein inniger Kontakt zwischen dem Sammler und dem Kondensator vorliegt. Die Leitungsstränge umschließen dabei die Kondensatoren, so dass im Betrieb des Solarkollektors eine gute Wärmeübertragung vom Kondensator auf den Sammler gewährleistet ist. Bei der Montage wird zunächst der Sammler montiert, und zwar, was nachfolgend noch genauer erläutert wird, "unverspannt". Als nächstes werden die Kondensatoren der Wärmerohre in Aufnahmebereiche an den Leitungssträngen eingeschoben. Dabei ist, um eine leichte Einschiebbarkeit zu ermöglichen, zwischen den Kondensatoren und den Leitungssträngen ein gewisses Spiel vorgesehen, das zum Abschluss der Montage allerdings zum Beispiel durch geeignete Metallklammern, die dazu dienen die Leitungsstränge fest auf die Kondensatoren zu pressen, beseitigt wird. Diese Solarkollektoren haben sich an sich bestens bewährt.

Der Erfindung liegt die Aufgabe zugrunde, einen Solarkollektor der eingangs genannten Art weiter zu verbessern. Insbesondere soll ein Solarkollektor geschaffen werden, bei dem das Wärmerohr auf möglichst einfache Weise (mindestens teilweise) vom Sammler abgekoppelt werden kann.

Diese Aufgabe ist mit einem Solarkollektor der eingangs genannten Art durch die im Kennzeichen des Patentanspruchs 1 aufgeführten Merkmale gelöst.

Nach der Erfindung ist also am Sammler mindestens ein temperaturabhängig arbeitendes Stellelement zum bedarfsweisen Ablösen mindestens eines der Leitungsstränge vom Kondensator vorgesehen.

Mit anderen Worten zeichnet sich die erfindungsgemäße Lösung dadurch aus, dass der Kontakt zwischen dem Kondensator und den Leitungssträngen während des Betriebs des Solarkollektors ganz gezielt mindestens teilweise, vorzugsweise vollständig aufgehoben werden kann, um eine weitere Wärmeübertragung vom Kondensator auf den Sammler zu reduzieren bzw. sogar zu unterbrechen. Dabei ist insbesondere vorgesehen, dass das erfindungsgemäße Stellelement ab einer (vor-) bestimmten Temperatur die Leitungsstränge auseinander bewegt, sprich einen Luftspalt zwischen dem Kondensator und dem Sammler erzeugt, der dann als Isolation zwischen diesen beiden Bauteilen wirkt.

Andere vorteilhafte Weiterbildungen des erfindungsgemäßen Solarkollektors ergeben sich aus den abhängigen Patentansprüchen.

Der erfindungsgemäße Solarkollektor einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

### Es zeigt schematisch

- Figur 1: in Seitenansicht einen aus den beiden Leitungssträngen und zwei Kondensatoren bestehenden Solarkollektor in "Unterbrechungsposition";
- Figur 2: den Solarkollektor gemäß Figur 1 in "normaler" Betriebsposition; und
- Figur 3: in Draufsicht den Solarkollektor gemäß Figur 1 mit Verpressungen im Bereich der Kondensatoraufnahmen zur Verbesserung der Wärmeübertragung.

Der in den Figuren dargestellte Solarkollektor besteht aus mehreren Wärmerohren 1 (dargestellt sind hiervon zwei), die jeweils in bekannter Weise einen Kondensator 2 aufweisen. Dieser Kondensator 2 ist zwischen zwei Leitungssträngen 3, 4 eines Sammlers angeordnet, wobei bei normaler Betriebsposition ein inniger Kontakt zwischen dem Sammler und dem Kondensator 2 vorliegt und wobei besonders bevorzugt - wie dargestellt - vorgesehen ist, dass die vorzugsweise als Hydroformrohre ausgebildeten Leitungsstränge 3, 4 an den vorzugsweise zylinderförmig ausgebildeten Kondensator 2 formangepasst ausgebildet sind.

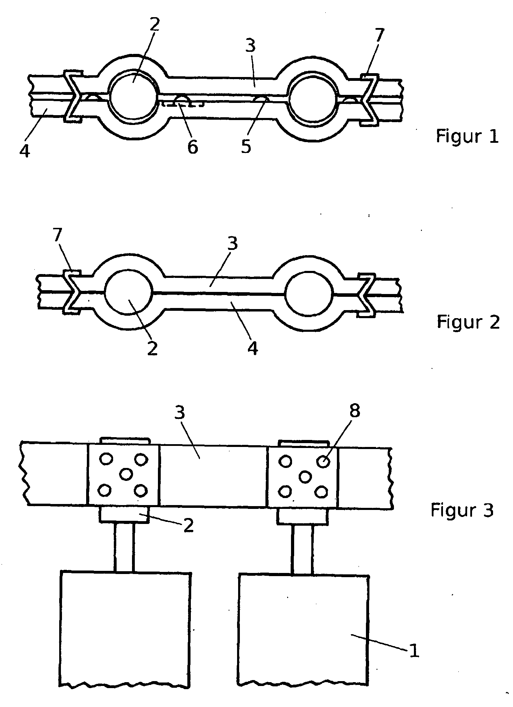

Außerdem ist in an sich bekannter weise vorgesehen, dass die Leitungsstränge 3, 4 vorzugsweise mit Klammerelementen 7 gegeneinander verspannt ausgebildet sind. Dies führt - bei "normaler" Betriebsposition (siehe Figur 2) zu einem innigen Kontakt zwischen dem Sammler und den Kondensatoren 2.

Wesentlich für den erfindungsgemäßen Solarkollektor ist nun, dass am Sammler mindestens ein temperaturabhängig arbeitendes Stellelement 5 zum bedarfsweisen Ablösen mindestens eines der Leitungsstränge 3, 4 vom Kondensator 2 vorgesehen ist. Diese Maßgabe führt, wie in Figur 1 dargestellt, dazu, dass der Kontakt zwischen dem Kondensator 2 und dem Sammler mindestens teilweise, vorzugsweise - wie dargestellt - vollständig unterbrochen und die Wärmeübertragung vom Kondensator 2 auf den Sammler unterbunden wird.

In diesem Zusammenhang ist im übrigen darauf hinzuweisen, dass eine Stagnation (gegebenenfalls Überhitzung der Wärmerohre) in der beschriebenen "Unterbrechungsposition" unproblematisch ist, da als Kältemittel im Wärmerohr besonders bevorzugt Wasser verwendet wird. In den Leitungssträngen 3, 4 befindet sich ein frostbeständiges Wärmeträgermedium, und zwar besonders bevorzugt Glykol.

Besonders bevorzugt ist weiterhin vorgesehen, dass das Stellelement 5 bei einer ersten, niedrigeren Temperatur mindestens in einer Raumrichtung eine andere (kleinere) räumliche Erstreckung als bei einer zweiten, höheren Temperatur aufweist. Noch etwas genauer betrachtet (siehe hierzu Figur 1), ist vorgesehen, dass das Stellelement 5 bei einer ersten, niedrigeren Temperatur ebenflächig und bei einer zweiten, höheren Temperatur gewölbt ausgebildet ist. Das Stellelement 5 ist dabei in der Lage, die Leitungsstränge 3, 4 gegen die Kraft der Klammerelemente 7 auseinander zu drücken.

Weiterhin ist bevorzugt vorgesehen, dass das Stellelement 5 zwischen den Leitungssträngen 3, 4 angeordnet ist, und zwar besonders bevorzugt in einer Vertiefung 6 am Sammler, die in Figur 1 gestrichelt angedeutet ist. Außerdem ist bevorzugt vorgesehen, dass das Stellelement 5 an einem neben einem Kondensator 2 befindlichen Bereich des Sammlers angeordnet ist.

Bezüglich der Materialauswahl des Stellelements 5 ist vorgesehen, dieses wahlweise aus Bimetall oder aus Memorymetall zu bilden.

Gemäß wikipedia (http://de.wikipedia,.org/w/index.php?title=Bimetall&oldid=113043953) ist dabei ein Bimetall ein Metallstreifen aus zwei Schichten unterschiedlicher Metalle, die miteinander stoffschlüssig oder formschlüssig verbunden sind. Charakteristisch ist die Veränderung der Form bei Temperaturänderung. Diese äußert sich als Verbiegung. Ursache ist der unterschiedliche Wärmeausdehnungskoeffizient der verwendeten Metalle. Diese Metalle können zum Beispiel Zink und Stahl sein oder auch Stahl in Kombination mit der Legierung Messing.

Memorymetalle werden gemäß wikipedia (http://de.wikipedia.org/ w/index.php?title=Formged%C3%A4chtnislegierung&oldid= 112466313) oft auch als Formgedächtnislegierungen bezeichnet. Dies rührt von dem Phänomen, dass sie sich an eine frühere Formgebung trotz nachfolgender starker Verformung scheinbar "erinnern" können. Die Formwandlung basiert auf der temperaturabhängigen Gitterumwandlung zweier verschiedener Kristallstrukturen (allotrope Umwandlung) eines Werkstoffes.

Schließlich sind am Sammler, insbesondere im Bereich des Kondensators 2, Verpressungen 8 (Dellen, Eintiefungen oder dergleichen) vorgesehen. Diese Verpressungen im Bereich der Kondensatoraufnahme haben die konkrete Aufgabe, die Strömung im Hydroformrohr von laminar auf turbulent zu ändern, um den Wärmeübergang vom Kondensator auf das Medium im Sammler zu verbessern.

### Bezugszeichenliste

- 1: Wärmerohr
- 2: Kondensator
- 3: Leitungsstrang
- 4: Leitungsstrang
- 5: Stellelement
- 6: Vertiefung
- 7: Klammerelement
- 8: Verpressung

## Patentansprüche

1. Solarkollektor, umfassend mindestens ein Wärmerohr (1) mit einem Kondensator (2), der zwischen zwei Leitungssträngen (3, 4) eines Sammlers angeordnet ist, wobei bei normaler Betriebsposition ein inniger Kontakt zwischen dem Sammler und dem Kondensator (2) vorliegt,
**dadurch gekennzeichnet,**
**dass** am Sammler mindestens ein temperaturabhängig arbeitendes Stellelement (5) zum bedarfsweisen Ablösen mindestens eines der Leitungsstränge (3, 4) vom Kondensator (2) vorgesehen ist.

2. Solarkollektors nach Anspruch 1,
**dadurch gekennzeichnet,**
**dass** das Stellelement (5) bei einer ersten Temperatur mindestens in einer Raumrichtung eine andere räumliche Erstreckung als bei einer zweiten Temperatur aufweist.

3. Solarkollektor nach Anspruch 1 oder 2,
**dadurch gekennzeichnet,**
**dass** das Stellelement (5) bei einer ersten Temperatur ebenflächig und bei einer zweiten Temperatur gewölbt ausgebildet ist.

4. Solarkollektor nach einem der Ansprüche 1 bis 3,
**dadurch gekennzeichnet,**
**dass** das Stellelement (5) zwischen den Leitungssträngen (3, 4) angeordnet ist.

5. Solarkollektor nach einem der Ansprüche 1 bis 4,
**dadurch gekennzeichnet,**
**dass** das Stellelement (5) in einer Vertiefung (6) am Sammler angeordnet ist.

6. Solarkollektor nach einem der Ansprüche 1 bis 5,
**dadurch gekennzeichnet,**
**dass** das Stellelement (5) an einem neben einem Kondensator (2) befindlichen Bereich des Sammlers angeordnet ist.

7. Solarkollektor nach einem der Ansprüche 1 bis 6,
**dadurch gekennzeichnet,**
**dass** das Stellelement (5) aus Bimetall gebildet ist.

8. Solarkollektor nach einem der Ansprüche 1 bis 6,
**dadurch gekennzeichnet,**
**dass** das Stellelement (5) aus Memorymetall gebildet ist.

9. Solarkollektor nach einem der Ansprüche 1 bis 8,
**dadurch gekennzeichnet,**
**dass** die Leitungsstränge (3, 4) vorzugsweise mit Klammerelementen (7) gegeneinander verspannt ausgebildet sind.

10. Solarkollektor nach einem der Ansprüche 1 bis 9,
**dadurch gekennzeichnet,**
**dass** am Sammler, insbesondere im Bereich des Kondensators (2), Verpressungen (8) zur Verbessung des Wärmeübergangs vorgesehen sind.

## Claims

1. Solar collector, comprising at least one heat pipe (1) with a condenser (2) which is disposed between two pipe strands (3, 4) of a collector, wherein in normal operating position an intimate contact exists between the collector and the condenser (2),
**characterized in**
**that** at least one temperature-dependently operating adjusting element (5) is provided on the collector for release of at least one of the pipe strands (3, 4) from the condenser (2) as required.

2. The solar collector according to claim 1,
**characterized in**
**that** at a first temperature the adjusting element (5) has a different spatial extension than at a second temperature, at least in one spatial direction.

3. The solar collector according to claim 1 or 2,
**characterized in**
**that** at a first temperature the adjusting element (5) is configured to be flat and at a second temperature it is curved.

4. The solar collector according to any one of claims 1 to 3,
**characterized in**
**that** the adjusting element (5) is disposed between the pipe strands (3, 4).

5. The solar collector according to any one of claims 1 to 4,
**characterized in**
**that** the adjusting element (5) is disposed in a recess (6) on the collector.

6. The solar collector according to any one of claims 1 to 5,
**characterized in**
**that** the adjusting element (5) is disposed on a region of the collector located next to a condenser (2).

7. The solar collector according to any one of claims 1 to 6,
**characterized in**
**that** the adjusting element (5) is formed from bimetal.

8. The solar collector according to any ane of claims 1 to 6,
**characterized in**
**that** the adjusting element (5) is formed from memory metal.

9. The solar collector according to any one of claims 1 to 8,
**characterized in**
**that** the pipe strands (3, 4) are preferably configured to be braced against one another with clip elements (7).

10. The solar collector according to any one of claims 1 to 9,
**characterized in**
**that** pressings (8) are provided on the collector, in particular in the region of the condenser (2) to improve the heat transfer.

## Revendications

1. Collecteur solaire, comprenant au moins un tube caloporteur (1) avec un condensateur (2), qui est disposé entre deux faisceau de conduites (3, 4) d'un collecteur, dans lequel à une position de fonctionnement normal un contact intime entre le collecteur et le condensateur (2) est présent,
**caractérisé en ce que**
sur le collecteur au moins un élément de réglage (5) fonctionnant en fonction de la température est prévu pour remplacer au besoin au moins un des faisceaux de conduites (3, 4) du condensateur (2).

2. Collecteur solaire selon la revendication 1,
**caractérisé en ce que**
l'élément de réglage (5) présente à une première température au moins dans une direction spatiale une autre extension spatiale qu'à une deuxième température.

3. Collecteur solaire selon la revendication 1 ou 2,
**caractérisé en ce que**
l'élément de réglage (5) est formé avec une surface plane à une première température et bombée à une deuxième température.

4. Collecteur solaire selon une des revendications 1 à 3,
**caractérisé en ce que**
l'élément de réglage (5) est disposé entre les faisceaux de conduites (3, 4).

5. collecteur solaire selon une des revendications 1 à 4,
**caractérisé en ce que**
l'élément de réglage (5) est disposé dans une cavité (6) sur le collecteur.

6. Collecteur solaire selon une des revendications 1 à 5,
**caractérisé en ce que**
l'élément de réglage (5) est disposé sur une zone du collecteur se trouvant à côté d'un condensateur (2).

7. Collecteur solaire selon une des revendications 1 à 6,
**caractérisé en ce que**
l'élément de réglage (5) est formé en bimétal.

8. Collecteur solaire selon une des revendications 1 à 6,
**caractérisé en ce que**
l'élément de réglage (5) est formé en métal à mémoire.

9. Collecteur solaire selon une des revendications 1 à 8,
**caractérisé en ce que**
les faisceaux de conduites (3, 4) sont conçus en étant serrés les uns contre les autres de préférence avec des éléments de serrage (7).

10. Collecteur solaire selon une des revendications 1 à 9,
**caractérisé en ce que**
sur le collecteur, notamment au niveau du condensateur (2), des profilés de pressage (8) sont prévus pour améliorer le transfert de chaleur.
